# EUROPEAN PATENT SPECIFICATION

(11) **EP 2 534 345 B1**
(45) Date of publication and mention of the grant of the patent: **14.10.2015**
(21) Application number: 11705217.5
(22) Date of filing: 26.01.2011
(51) Int. Cl.: F02M 43/00, F02D 41/30, F02D 19/06, F02D 19/10, F01N 3/20, F02D 41/00

(54) **METHOD AND ARRANGEMENT FOR CONTROLLING PILOT FUEL INJECTION TO LIMIT NOx EMISSIONS OF SUPERCHARGED ENGINE**
VERFAHREN ZUR REDUKTION DER NOX-EMISSIONEN EINES AUFGELADENEN MOTORS MITTELS KONTROLLE DER PILOTEINSPRITZUNG
PROCEDE POUR LIMITER LES EMISSIONS DE NOX DANS UN MOTEUR SURALIMENTÉ EN CONTROLANT L'INJECTION PILOTE

(30) Priority: 10.02.2010 FI 20105130
(43) Date of publication of application: 19.12.2012
(73) Proprietor: Wärtsilä Finland Oy, 65101 Vaasa (FI)
(72) Inventor: CAFARI, Alberto, 34018 Trieste (IT); HATTAR, Christer, 65300 Vaasa (FI)
(74) Representative: Berggren Oy Ab
(86) International application number: PCT/FI2011/050059
(87) International publication number: WO 2011/098663

(56) References cited:
- WO-A1-2007/115594
- WO-A2-2009/135071
- CA-A1- 2 721 915
- US-A1- 2002 020 388
- US-A1- 2002 078 918
- US-A1- 2004 040 284
- US-B1- 7 284 506

## Description

### Field of technology

This invention relates to a method and arrangement for controlling pilot fuel injection to limit NOx emissions in a supercharged engine. More specifically the invention relates to a reciprocating engine that can use gas as fuel.

### Prior art

A supercharged engine comprises a supercharging system. The system can be, for example, a turbocharged system. The charged air is conducted to the cylinders of the engine. When gas is used as fuel, the gas is mixed with the air in a cylinder specific way. It is also known to use either gas or oil as fuel in an engine. This type of engines is called dual-fuel engines.

The control of pilot fuel injection is a known way to minimize NOx (nitrogen oxide) emissions of an engine as can be found in publication EP 1559887. Further it is common that an engine comprises a SCR (Selective Catalytic Reduction) unit for reducing NOx emissions in exhaust gas. The SCR unit is a powerful device for reducing the NOx emissions. However, it is desirable to achieve as low NOx emissions as possible.

The control of fuel injection in a gas engine, in order to reduce the fluctuation of NOX emissions, is known from publication CA2721915.

The reduction of NOX emissions by acting on the quantity or timing of the pilot fuel, in a supercharged gas engine, is known from publication US2002078918.

### Short Description

The objective of the invention is to reduce NOx emissions of a supercharged engine as much as possible. This is achieved by an arrangement and a method described in the independent claims. Dependent claims describe different embodiments of the invention.

The idea of the invention is to reduce the NOx oscillation at the exhaust gases. According the invention also the SCR unit runs more efficiently if NOx concentration in the exhaust gas fluctuates within certain limits. Therefore the fluctuation is kept within a certain range according to the invention. It has been found that a supercharged air pressure has an effect on the NOx concentration.

The inventive arrangement comprises an engine control unit, a SCR unit and a pilot fuel injector. The engine control unit is connected with the pilot fuel injector for controlling pilot fuel injection, and the SCR unit is arranged to reduce NOx emissions of an exhaust gas of the engine. Further, the arrangement comprises a charge air sensor that is connected with the engine control unit. The engine control unit comprises an adjustment unit that is arranged to receive charge air reference data signals and signals from the charge air sensor, and also to form an adjustment signal. The adjustment signal is arranged to adjust the control of the pilot fuel injector.

The inventive method comprises the steps of: receiving signals that are indicative of various engine operating conditions; and forming a control signal as response to the received signals for controlling the pilot fuel injection. The method further comprises the steps of: receiving second signals that are indicative of charged air pressure and reference charged air pressure; forming an adjustment signal as response to the received second signals; and adjusting the control signal by using the adjustment signal.

### Drawings

Next the invention is described in more detail with the figures of the attached drawings in which drawings
Figure 1 illustrates an example of an inventive arrangement,
Figure 2 illustrates an example of a control unit of the invention in more detail,
Figure 3 illustrates an example of the invention's effect on the NOx fluctuation before the SCR unit,
Figure 4 illustrates an example of a flow diagram from the inventive method, and
Figure 5 illustrates an example of an adjustment unit.

### Description

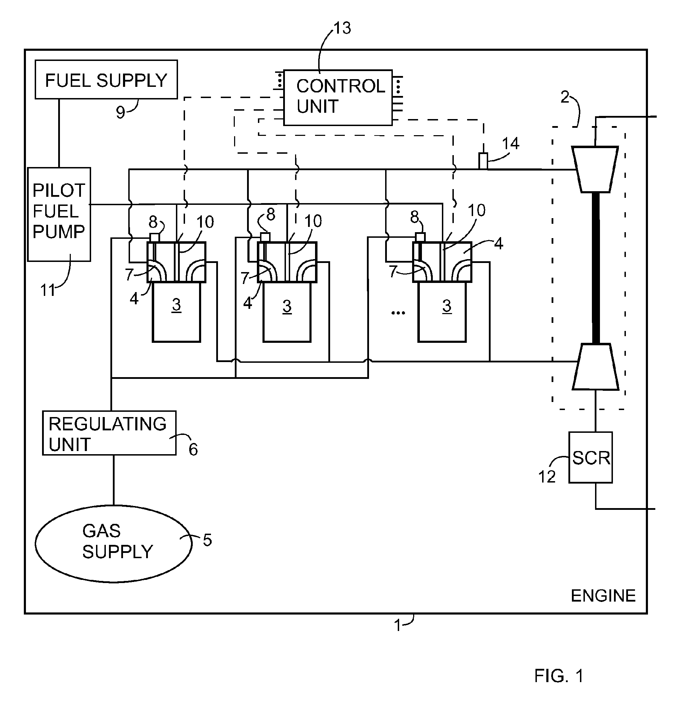

Figure 1 illustrates an example of the inventive arrangement. The arrangement is installed in a supercharged engine construction 1. A supercharging element 2 increases the pressure of an incoming air. The supercharged air is conducted to each cylinder 3 of the engine through a cylinder head 4. The gas to be burned in the cylinders is conducted from a gas supply system 5 to the cylinders. Before distributing the gas in the engine it flows through a gas regulating unit 6. The regulation unit regulates the gas pressure to a correct value under different loads. The gas is mixed with the air in an air inlet 7 of each cylinder head 4. Cylinder specific admission valves 8 provide a correct gas feed to each cylinder individually.

The engine may be a dual fuel engine using gas as main fuel and oil as pilot fuel. It is preferable that the engine is a lean burn gas engine.

The air/gas mixture is ignited by using a pilot fuel. The pilot fuel is conducted from a fuel supply 9 to pilot fuel injection valves 10 through a pilot fuel pump 11. Pressure and temperature condition in the combustion chamber promotes the self ignition of the pilot fuel that burning commences the air gas mixture combustion.

After the burning of the air/gas mixture, exhaust gases are conducted out from the engine via a SCR unit 12. The SCR unit reduces the NOx emissions of the exhaust gas. As can be seen in Fig. 1, the exhaust gases run the supercharging element 2 that is a turbocharging element in this case.

A control unit 13 controls the functions of the engine 1. Most of controlling connections are not illustrated in Fig. 1, since they are known as such and are not necessary for illustrating the invention. Further, it must be noted that Fig. 1 is a simplified illustration of the engine, which does not contain all elements of the engine. Fig. 1 and the other figures are for a purpose of illustrating the invention. So it is evident that real embodiments comprise a great number of devices and parts that are not showed in this description.

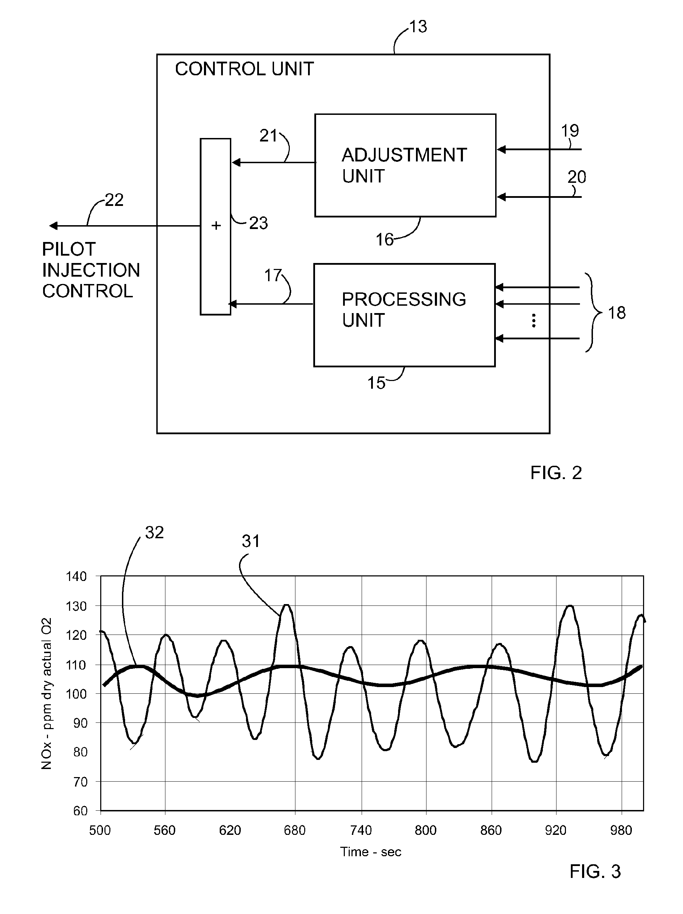

The inventive arrangement comprises a charge air pressure sensor 14 as showed in Fig. 1. The pressure sensor is connected with the control unit 13 for transmitting pressure measurement signals to the control unit. The control unit receives also reference data of the charge air pressure. The control unit is illustrated in more detail in Fig. 2. The control unit provides cylinder specific control signals for controlling the pilot injection valves 10 to limit the NOx emissions fluctuation.

The control unit 13 comprises a processing unit 15 that is arranged to receive different signals 18 that are indicative of various engine operating conditions, such as speed, load, cylinder specific exhaust gas temperatures etc.. In prior art solutions, the processing unit provides control signals 17 for controlling timing and amount of pilot fuel injection in the pilot injection valves. Especially data of the engine load and engine speed are used for the pilot injection control. The inventive control unit comprises also an adjustment unit 16. The adjustment unit is arranged to receive reference data 19 of the supercharged air pressure and measuring data 20 indicative of the supercharged air pressure from the charged air pressure sensor 14. The task of the adjustment unit is to compare the reference supercharged air pressure with the measured supercharged air pressure and to form an adjustment signal. The adjustment signal can be formed by using a table that contains statistical information about a relationship between the NOx fluctuation in the SCR unit 12 and the supercharged air pressure. So, the adjustment signal takes into account the real turbocharged air pressure that has an effect in the NOx fluctuation. The adjustment signal 21 adjusts 23 the pilot injection control signal 17 in such a way that the NOx fluctuation of the SCR unit decreases. Therefore the pilot control signals 22 to be transmitted to the injection valves takes into account the normal pilot fuel control and the fluctuations of the NOx concentration in the SCR unit. Combining of the adjustment signal and the normal control signal can be made by adding the signals as illustrated in Fig. 2. Another way is to multiply the both signals using coefficients in which case the adjustment unit is designed for this type of combining. The combining can be made in a separate unit 23 of the control unit as illustrated, or it can be as an integrated function of the normal construction of the control unit.

Fig. 3 shows an example of how the invention decreases the NOx fluctuation in the SCR unit 12. A thinner line 31 illustrates the fluctuation without the inventive arrangement. A wider line 32 illustrates the fluctuation with the inventive arrangement. As can be seen the invention reduces the fluctuation significantly. Thus it decreases the NOx emissions of the engine by better SCR operative efficiency. In gas engines the NOx concentration in the exhaust gasses is ruled mainly by air/gas fuel ratio (lower air/gas fuel ratio means higher NOx and vice versa). The air amount control has its own functional limits that do not ensure the NOx stability for the SCR system. The invention makes it possible to control the fluctuation of the NOx concentration by adjusting the pilot fuel amount in each cycle of the cylinders. Higher pilot fuel amount means higher NOx values and vice versa. The maximum and minimum allowed pilot fuel amounts are taken into account for avoiding misfiring and knocking.

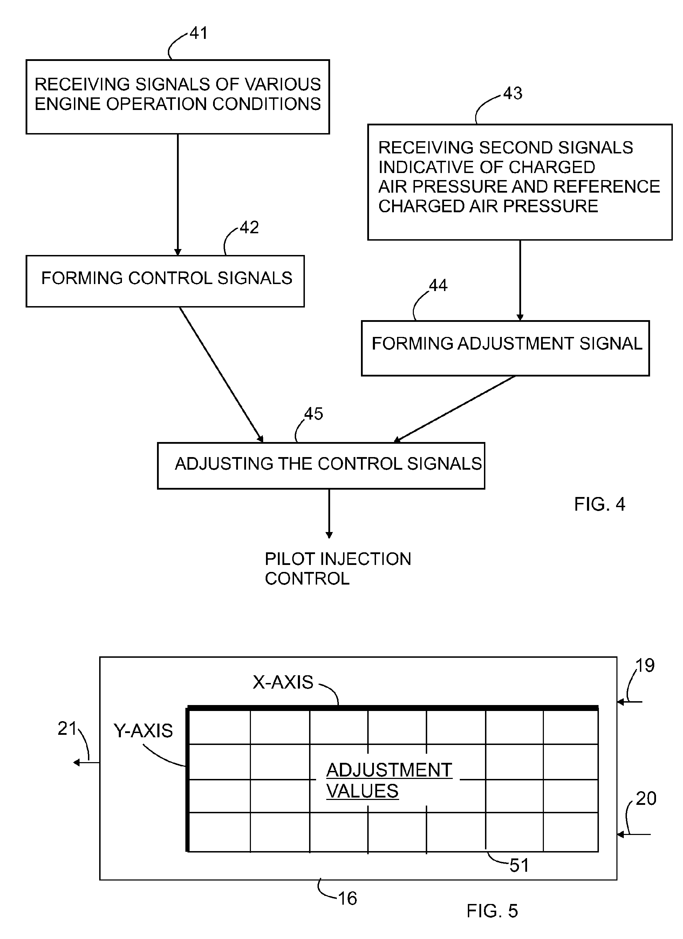

Fig. 5 illustrates an embodiment of the structure of the adjustment unit 16 in more detail. It has been noticed that if the charge air pressure moves above the reference value of the charge air, the NOx value in the exhaust gasses decreases, and vice versa. Further, if the pilot fuel amount increases, the NOx value in the exhaust gasses increases and vice versa. Therefore, the effect of charge air pressure is taken into account when forming the pilot injection control signal (See Fig. 2).

The table 51 of Fig. 5 shows adjustment values for the pilot injection control signal at different charge air pressure conditions. The y-axis represents the deviation of the charge air pressure. The deviation is determined as a difference between a reference value and a measured value of the charge air pressure. The x-axis represents measured charge air pressure. The adjustment values are durations in microseconds in this example. In other words, the duration of the pilot injection is adjusted to take into account the charge air pressure. The duration of the injection affects to the amount of the pilot fuel injection.

The table is not the only choice for providing the functionality of the adjustment unit. It is also possible to use, for example, a function where the input signals consist in whatever engine parameter that is connected to the NOx formation (as the deviation of charge air pressure used in the previous example) and as output a correction for the pilot fuel duration.

Fig. 4 illustrates an example of the inventive method as a flow diagram. The method comprises the steps of: receiving 41 signals that are indicative of various engine operating conditions; and forming 42 a control signal as response to the received signals for controlling the pilot fuel injection. These steps are normal for controlling pilot fuel injection valves. The method further comprises the steps of: receiving 43 second signals that are indicative of charged air pressure and reference charged air pressure; forming 44 an adjustment signal as response to the received second signals; and adjusting 45 the control signal by using the adjustment signal. The steps of receiving the second signals 43 and forming 44 the adjustment signal take into account the relationship between the supercharged air pressure and the NOx fluctuation in the SCR unit 12. The adjustment step 45 combines the normal control signal and the adjustment signal for providing the pilot control signal to be sent to the pilot injection valves.

The step 44 of forming the adjustment signal can be adapted to utilize a table that contains statistical information about a relationship between the NOx fluctuation in the SCR unit 12 and the supercharged air pressure. The step 45 of adjusting the control signals can be arranged to comprise a combination function for combining the adjustment signal (21) with the control signals (17). The combination function can, for example, be an add function.

The inventive control can be used with pilot fuel for all the dual fuel engines with pilot liquid fuel as ignition source. The adjustment unit can be properly tuned for different engines. In light of the examples above it is clear that an embodiment of the invention can be achieved in many ways. It is also clear that the invention is not restricted to the examples of this text, but the invention can be formed in any form within the limits of the claims.

## Claims

1. An arrangement for limiting NOx emissions of a supercharged engine (1) that can use gas as fuel., which arrangement comprises an engine control unit (13), which engine control unit (13) comprises a processing unit (15) for forming control signals (17) for the pilot fuel injectors, and the control unit (13), is connectable with pilot fuel injectors (10) for controlling pilot fuel injection, **characterized in that**, the engine control unit (13) further comprises an adjustment unit (16) that is arranged to receive reference data signals (19) and signals (20) from a charge air pressure sensor (14) and also to form an adjustment signal (21) by comparing the reference data signals (19) and said signals from the sensor (20), which reference signals and signals from the sensor correlate with fluctuation of the NOx emissions, and which adjustment signal is arranged to adjust the control of the pilot fuel injectors to reduce the NOx fluctuation at exhaust gases for limiting the NOx emissions.

2. An arrangement according to claim 1, **characterized in that** it comprises a combination function for combining the adjustment signal (21) with the control signals (17).

3. An arrangement according to claim 2, **characterized in that** the control unit (13) comprises a combination unit (23) for providing the combination function.

4. An arrangement according to claim 3, **characterized in that** the combination function an add function.

5. An arrangement according to claim 1 -4, **characterized in that** it comprises a SCR unit (12) that is arranged to reduce NOx emissions of an exhaust gas of the engine, the sensor (14) being a charge air sensor, the reference signals and the signals from the sensor (14) containing charge air pressure values

6. An arrangement according to claim 5, **characterized in that** the adjustment unit (16) comprises a table that contains statistical information about a relationship between the NOx fluctuation in the SCR unit (12) and the supercharged air pressure.

7. A method for controlling pilot fuel injection to limit NOx emissions of a supercharged engine, the method comprising the steps of:
receiving signals that are indicative of various engine operating conditions (41); and
forming control signals as response to the received signals for controlling
the pilot fuel injection (42),
**characterized in that** the method further comprises the steps of:
receiving second signals that are indicative of an engine charge air pressure operating condition and a corresponding reference condition, the second signals also correlating with fluctuation of the NOx emissions (43);
forming an adjustment signal as response to the received second signals (44); and
adjusting the control signals by using the adjustment signal (45).

8. An method according to claim 7, **characterized in that** the step (45) of adjusting the control signals comprises a combination function for combining the adjustment signal (21) with the control signals (17).

9. An method according to claim 8, **characterized in that** the combination function an add function.

10. An method according to claim 7, **characterized in that** the step (44) of forming the adjustment signal is adapted to utilize a table that contains statistical information about a relationship between NOx fluctuation in a SCR unit (12) and the charge air pressure

## Patentansprüche

1. Anordnung zur Begrenzung von NOx-Emissionen eines aufgeladenen Motors (1), der Gas als Kraftstoff verwenden kann, wobei die Anordnung eine Motorsteuereinheit (13) umfasst, wobei die Motorsteuereinheit (13) eine Verarbeitungseinheit (15) zum Bilden von Steuersignalen (17) für Pilotkraftstoffinjektoren umfasst, und die Steuereinheit (13) mit den Pilotkraftstoffinjektoren (10) zum Steuern der Pilotkraftstoffeinspritzung verbindbar ist, **dadurch gekennzeichnet, dass** die Motorsteuereinheit (13) ferner eine Einstelleinheit (16) aufweist, die ausgebildet ist, Referenzdatensignale (19) und Signale (20) von einem Ladeluftdrucksensor (14) zu empfangen und auch ein Einstellsignal (21) durch Vergleich der Referenzdatensignale (19) und der Signale vom Sensor (20) zu bilden, wobei die Referenzsignale und die Signale vom Sensor mit Fluktuationen der NOx-Emissionen korrelieren, und wobei das Einstellsignal ausgebildet ist, die Steuerung der Pilotkraftstoffinjektoren so einzustellen, dass die NOx-Fluktuationen der Abgase zur Begrenzung der NOx-Emissionen reduziert werden.

2. Anordnung nach Anspruch 1, **dadurch gekennzeichnet, dass** sie eine Kombinationsfunktion zum Kombinieren des Einstellsignals (21) mit den Steuersignalen (17) umfasst.

3. Anordnung nach Anspruch 2, **dadurch gekennzeichnet, dass** die Steuereinheit (13) eine Kombinationseinheit (23) zum Vorsehen der Kombinationsfunktion umfasst.

4. Anordnung nach Anspruch 3, **dadurch gekennzeichnet, dass** die Kombinationsfunktion eine Addierfunktion ist.

5. Anordnung nach Anspruch 1 - 4, **dadurch gekennzeichnet, dass** sie eine SCR-Einheit (12) aufweist, die ausgebildet ist, NOx-Emissionen eines Abgases des Motors zu reduzieren, wobei der Sensor (14) ein Ladeluftsensor ist, und die Referenzsignale und die Signale vom Sensor (14) Ladeluftdruckwerte enthalten.

6. Anordnung nach Anspruch 5, **dadurch gekennzeichnet, dass** die Einstelleinheit (16) eine Tabelle umfasst, die statistische Informationen über eine Beziehung zwischen den NOx-Fluktuationen in der SCR-Einheit (12) und dem aufgeladenen Luftdruck enthält.

7. Verfahren zum Steuern der Pilotkraftstoffeinspritzung zur Begrenzung von NOx-Emissionen eines aufgeladenen Motors, wobei das Verfahren die folgenden Schritte umfasst:
Empfangen von Signalen, die verschiedene Motorbetriebsbedingungen (41) anzeigen; und
Bilden von Steuersignalen als Reaktion auf die empfangenen Signale zum Steuern der Pilotkraftstoffeinspritzung (42),
**dadurch gekennzeichnet, dass** das Verfahren ferner die folgenden Schritte umfasst:
Empfangen von zweiten Signalen, die eine Motorladeluftdruck-Betriebsbedingung und eine entsprechende Referenzbedingung anzeigen, wobei die zweiten Signale ebenfalls mit Fluktuationen der NOx-Emissionen (43) korrelieren;
Bilden eines Einstellsignals als Reaktion auf die empfangenen zweiten Signale (44); und
Einstellen der Steuersignale unter Verwendung des Einstellsignals (45).

8. Verfahren nach Anspruch 7, **dadurch gekennzeichnet, dass** der Schritt (45) des Einstellens der Steuersignale eine Kombinationsfunktion zum Kombinieren des Einstellsignals (21) mit den Steuersignalen (17) umfasst.

9. Verfahren nach Anspruch 8, **dadurch gekennzeichnet, dass** die Kombinationsfunktion eine Addierfunktion ist.

10. Verfahren nach Anspruch 7, **dadurch gekennzeichnet, dass** der Schritt (44) des Bildens des Einstellsignals ausgebildet ist, eine Tabelle zu verwenden, die statistische Informationen über eine Beziehung zwischen NOx-Fluktuationen in einer SCR-Einheit (12) und dem Ladeluftdruck enthält.

## Revendications

1. Dispositif de limitation d'émissions de NOx d'un moteur ultrachargé (1) qui peut utiliser du gaz comme carburant, lequel dispositif comprend une unité de commande de moteur (13), laquelle unité de commande de moteur (13) comprend une unité de traitement (15) pour générer des signaux de commande (17) pour les injecteurs de carburant pilote et l'unité de commande (13) étant connectable à des injecteurs de carburant pilote (10) pour contrôler l'injection de carburant pilote, **caractérisé en ce que** l'unité de commande de moteur (13) comprend en outre une unité de réglage (16) qui est conçue pour recevoir des signaux de données de référence (19) et des signaux (20) de la part d'un capteur de pression d'air de charge (14) et aussi pour générer un signal de réglage (21) en comparant les signaux de données de référence (19) et lesdits signaux du capteur (20), lesquels signaux de référence et signaux du capteur étant en corrélation avec la variation des émissions de NOx et lequel signal de réglage étant conçu pour régler la commande des injecteurs de carburant pilote afin de réduire la variation du NOx au niveau des gaz d'échappement pour limiter les émissions de NOx.

2. Dispositif selon la revendication 1, **caractérisé en ce qu'**il comprend une fonction de combinaison pour combiner le signal de réglage (21) aux signaux de commande (17).

3. Dispositif selon la revendication 2, **caractérisé en ce que** l'unité de commande (13) comprend une unité de combinaison (23) pour assurer la fonction de combinaison.

4. Dispositif selon la revendication 3, **caractérisé en ce que** la fonction de combinaison est une fonction d'ajout.

5. Dispositif selon les revendications 1 - 4, **caractérisé en ce qu'**il comprend une unité SCR (12) qui est conçue pour réduire les émissions de NOx d'un gaz d'échappement du moteur, le capteur (14) étant un capteur d'air de charge, les signaux de référence et les signaux du capteur (14) contenant des valeurs de pression d'air de charge.

6. Dispositif selon la revendication 5, **caractérisé en ce que** l'unité de réglage (16) comprend une table qui contient des informations statistiques sur une relation entre la variation de NOx dans l'unité SCR (12) et l'air de pression ultrachargé.

7. Procédé de commande de l'injection de carburant pilote pour limiter les émissions de NOx d'un moteur ultrachargé, ce procédé comprenant les étapes consistant à :
recevoir des signaux qui sont indicateurs de divers états de fonctionnement du moteur (41) ; et
générer des signaux de commande en réponse aux signaux reçus pour commander l'injection de carburant pilote (42),
**caractérisé en ce que** le procédé comprend en outre les étapes consistant à :
recevoir de seconds signaux qui sont indicateurs d'un état de fonctionnement d'air de pression de charge de moteur et d'un état de référence correspondant, les second signaux étant aussi en corrélation avec la variation des émissions de NOx (43) ;
générer un signal de réglage en réponse aux seconds signaux reçus (44) ; et
régler les signaux de commande en utilisant le signal de réglage (45).

8. Procédé selon la revendication 7, **caractérisé en ce que** l'étape (45) de réglage des signaux de commande comprend une fonction de combinaison pour combiner le signal de réglage (21) aux signaux de commande (17).

9. Procédé selon la revendication 8, **caractérisé en ce que** la fonction de combinaison est une fonction d'ajout.

10. Procédé selon la revendication 7, **caractérisé en ce que** l'étape (44) de génération du signal de réglage est adaptée pour utiliser une table qui contient des informations statistiques sur une relation entre la variation de NOx dans une unité SCR (12) et la pression d'air de charge.
